Europäisches Patentamt

European Patent Office

Office européen des brevets

(11) Veröffentlichungsnummer: **0 115 598**
A1

## (12) EUROPÄISCHE PATENTANMELDUNG

(21) Anmeldenummer: 83112447.4

(22) Anmeldetag: 10.12.83

(51) Int. Cl.³: **B 23 K 31/06**, B 23 K 9/04

(30) Priorität: **12.01.83 DE 3300827**

(43) Veröffentlichungstag der Anmeldung: **15.08.84**
**Patentblatt 84/33**

(84) Benannte Vertragsstaaten: **AT CH DE FR GB IT LI NL SE**

(71) Anmelder: **Thyssen Aktiengesellschaft vorm. August Thyssen-Hütte, D-4100 Duisburg (DE)**

(72) Erfinder: **Luckow, Herbert, Mathildenstrasse 39, D-4000 Düsseldorf (DE)**
Erfinder: **Plantikow, Ulrich, Dr., Wülfrather Strasse 20, D-4000 Düsseldorf (DE)**
Erfinder: **Gröne, Siegfried, Am Schichtmeister 108, D-5810 Witten-Annen (DE)**

(74) Vertreter: **Patentanwaltsbüro Cohausz & Florack, Postfach 14 01 47, D-4000 Düsseldorf 1 (DE)**

(54) Vorrichtung zur Herstellung zylindrischer Hohlkörper.

(57) Es ist eine in radialer Richtung veränderbare Verbindung mittels elastisch verformbarer Elemente zwischen einem drehbar gelagerten und antreibbaren Stützkörper und einem Grundkörper hergestellt, auf den das Schweißmaterial niedergelegt wird. Es ist vorgesehen, daß auf dem Umfang des Stützkörpers gleichmäßig verteilt elastisch verformbare metallische Profile lösbar befestigt sind. Ferner soll der Grundkörper aus einem um die Profile herumgelegten und mit diesen lösbar verbundenen Blech oder Band bestehen.

Vorrichtung zur Herstellung zylindrischer Hohlkörper

Die Erfindung betrifft eine Vorrichtung zur Herstellung zylindrischer Hohlkörper durch formgebendes Schweißen mit einer in radialer Richtung veränderbaren Verbindung mittels eleastisch verformbarer Elemente zwischen einem drehbar gelagerten und antreibbaren Stützkörper und einem Grundkörper, auf den das Schweißmaterial niedergelegt wird.

Aus der DE-PS 30 29 686 ist eine Vorrichtung bekannt, bei der die in radialer Richtung veränderbare Verbindung aus elastisch nachgiebigen Schrumpfelementen besteht. Die Schrumpfelemente sind insbesondere als U-förmige Federelemente mit achsparallel verlaufenden U-Schenkeln ausgebildet und im Zwischenraum zwischen Stützkörper und Grundkörper in einem in Umfangs- und Achsrichtung wählbaren Abstand voneinander angeordnet.

Mit dieser Vorrichtung ist es möglich, ein gleichmäßiges Aufnehmen der Schrumpfspannungen zu erzielen, die beim Herstellen zylindrischer Hohlkörper durch formgebendes Schweißen auftreten. Die elastisch nachgiebigen Schrumpfelemente nehmen die Schrumpfspannungen auf, wobei je-

83/301 EU
W/GN

0115598

doch nicht immer vermieden werden kann, daß auch der Stützkörper gewissen Verformungen unterworfen wird. Veränderungen der Kreisform bzw. Durchmesserveränderungen über die Länge des hergestellten Hohlkörpers treten jedoch im allgemeinen nicht auf.

Bei dieser bekannten Vorrichtung ist es jedoch erforderlich, die elastisch nachgiebigen Schrumpfelemente sowohl mit dem Stützkörper als auch mit dem Grundkörper fest zu verschweißen. Die Entfernung des Stützkörpers aus dem fertiggestellten Hohlkörper ist daher nur unter Beschädigung des Stützkörpers möglich, so daß er zur Herstellung weiterer Hohlkörper nicht ohne weiteres wiederverwendet werden kann.

Ein weiterer Nachteil besteht darin, daß eine Anpassung der Vorrichtung an unterschiedliche Innendurchmesser von Grundkörpern nicht möglicht ist, so daß für jeden Durchmesser jeweils eine gesonderte Vorrichtung gebaut werden muß. Hiermit ist eine weitere Verteuerung verbunden.

Eine Vorrichtung, die wiederholt verwendbar und auch unabhängig von dem jeweiligen Durchmesser des Grundkörpers ist, ist aus der DE-PS 28 50 721 bekannt. Bei dieser Vorrichtung besteht die in radialer Richtung verstellbare Verbindung zwischen dem drehbar gelagerten und angetriebenen Stützkörper und dem Grundkörper aus Stützgliedern, die zur radialen Verstellung mit einem Spindeltrieb ausgerüstet sind. Hiermit ist eine Anpassung an unterschiedliche Durchmesser der herzustellenden Hohlkörper möglich. Eine Aufnahme der beim formgebenden Schweißen auftretenden Schrumpfspannungen läßt sich bei Verwendung dieser bekannten Vorrichtung jedoch nicht erzielen. Beim Einsatz einer derartigen Vorrichtung hat sich gezeigt, daß die Spindeltriebe durch die auftretenden Schrumpfspannungen sogar zerstört worden sind.

0115598

Der Erfindung liegt die Aufgabe zugrunde, eine Vorrichtung zu schaffen, mit der eine gleichmäßige Aufnahme der Schrumpfspannungen erzielt werden kann und deren drehbar gelagerter und antreibbarer Stützkörper wiederverwendbar und an unterschiedliche Innendurchmesser der herzustellenden Hohlkörper anpaßbar ist.

Diese Aufgabe wird erfindungsgemäß mit einer Vorrichtung der eingangs beschriebenen Art gelöst, welche die im Anspruch 1 gekennzeichneten Merkmale aufweist. Vorteilhafte Ausgestaltungen der erfindungsgemäßen Vorrichtung sind in den Unteransprüchen gekennzeichnet.

Die mit der erfindungsgemäßen Vorrichtung erzielten Vorteile bestehen darin, daß die verformbaren metallischen Profile die beim formgebenden Schweißen auftretenden Schrumpfspannungen gleichmäßig aufnehmen. Die lösbare Befestigung der Profile am Stützkörper erlaubt es weiter, nach Fertigstellung des Hohlkörpers den Stützkörper unbeschädigt aus diesem zu entfernen. Da die Profile auf dem Umfang des Stützkörpers gleichmäßig verteilt angeordnet sind und sich bevorzugt über die gesamte Länge des Stützkörpers erstrecken, ist eine Verformung des Stützkörpers durch die auftretenden Schrumpfspannungen beim formgebenden Schweißen praktisch ausgeschlossen. Der Stützkörper kann daher ohne weiteres einer neuen Verwendung zugeführt werden.

Die lösbare Befestigung der Profile am Grundkörper macht es weiter möglich, nach Fertigstellung des Hohlkörpers die verformten Profile ohne Schwierigkeiten aus dem Hohlkörper zu entfernen.

Ein weiterer Vorteil besteht in der Anpassung der Vorrichtung an unterschiedliche Innendurchmesser der herzu-

0115598

stellenden Hohlkörper. Diese Anpassung kann einmal geschehen durch die Verwendung von metallischen Profilen mit unterschiedlicher radialer Ausdehnung, insbesondere durch zylindrische Vollrohre, Halbrohre, Winkel-, Z- oder Wellblechprofile mit unterschiedlichem Durchmesser bzw. radialer Abmessung und andererseits dem Umfang des Stützkörpers, auf derem Umfang die metallischen Profile lösbar befestigt sind.

Die Erfindung wird nachstehend an zwei in der Zeichnung dargestellten Beispielen beschrieben und weitere Vorteile erläutert. Die Zeichnung zeigt in

Fig. 1    eine erste Ausführungsform der erfindungsgemäßen Vorrichtung in Stirnansicht und in

Fig. 2    die Vorrichtung gemäß Fig. 1 in Seitenansicht, teilweise axial geschnitten,

Fig. 3    eine zweite Ausführungsform der erfindungsgemäßen Vorrichtung in Stirnansicht und in

Fig. 4    die Vorrichtung gemäß Fig. 3 als Seitenansicht, teilweise axial geschnitten,

Fig. 5    einen Schnitt nach der Linie V-V in Fig. 1.

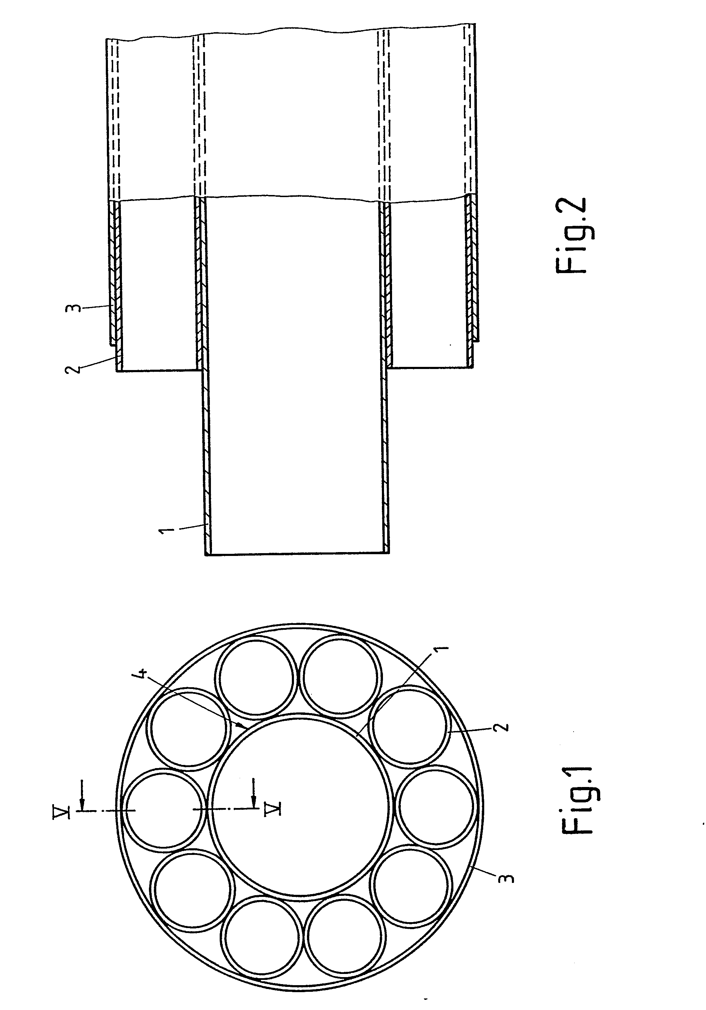

Die Vorrichtung gemäß Fig. 1 und 2 weist einen zylindrischen Stützkörper 1 auf, der in nicht dargestellter Weise an seinen Enden drehbar gelagert ist. Ein Drehantrieb für den Stützkörper 1 ist ebenfalls nicht gezeichnet. Auf dem Umfang 4 des Stützkörpers 1 sind verformbare metallische Profile in Form zylindrischer Vollrohre angeordnet. Die Vollrohre erstrecken sich über die gesamte Länge des Stützkörpers 1 und sind durch einzelne Punktschweißungen am Umfang 4 des Stützkörpers befestigt. Die Befestigung kann auch auf andere Weise erfolgen, z.B. mittels Bandagen oder lösbarer Schraubverbindungen. Um die Vollrohre ist wendelförmig ein Stahlband gewickelt, das an diesen ebenfalls durch einzelne Punktschweißungen befestigt ist. Anstelle des wendelförmig gewickelten Stahlbandes kann auch ein Stahlblech um die Vollrohre gelegt sein. Das Stahlband bildet den Grundkörper 3 der Vorrichtung, auf den das Schweißmaterial mittels nicht dargestellter Schweißköpfe beim formgebenden Schweißen des herzustellenden Hohlkörpers niedergelegt wird.

Die Vollrohre nehmen die durch die Schweißspannungen beim formgebenden Schweißen auftretenden Verformungen gleichmäßig auf. Die Geometrie des Grundkörpers 3 verändert sich entsprechend der Verformung der Vollrohre, während die Geometrie des Stützkörpers 1 erhalten bleibt. Nach Fertigstellung des formgebenden geschweißten Hohlkörpers kann der Stützkörper 1 nach Lösen der Punktschweißstellen aus dem Hohlkörper herausgezogen und anschließend wieder verwendet werden. Nach Lösen der übrigen Punktschweißstellen oder sonstigen Verbindungsmittel können die verformten Vollrohre aus dem Hohlkörper herausgezogen werden, und der erzeugte Hohlkörper kann den weiteren Bearbeitungsstationen zugeführt werden.

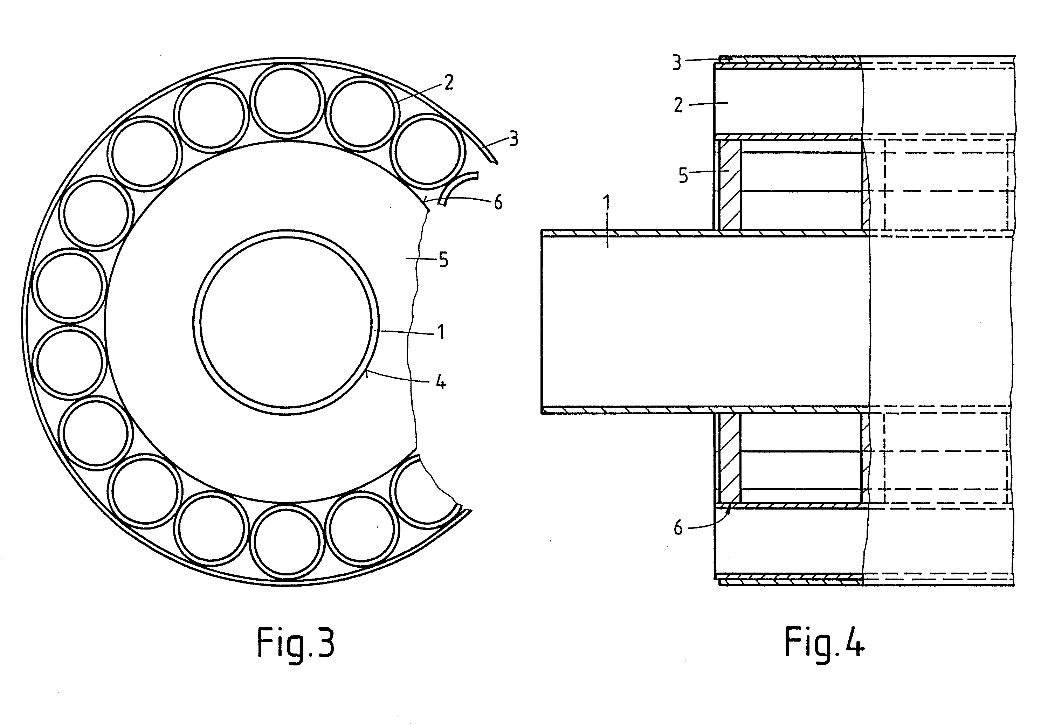

Die Vorrichtung gemäß Fig. 3 und 4 weist ebenso einen Stützkörper 1 auf, der in nicht dargestellter Weise an seinen Enden dreh- und antreibbar gelagert ist. Ein Drehantrieb für den Stützkörper 1 ist ebenfalls nicht gezeichnet. Auf dem Umfang 4 des Stützkörpers 1 sind in regelmäßigen Abständen Distanzscheiben 5 angeordnet, die durch nicht dargestellte Befestigungsmittel lösbar auf dem Umfang des Stützkörpers befestigt sind. Auf dem Umfang 6 der Distanzscheiben 5 sind verformbare metallische Profile 2 in Form zylindrischer Vollrohre angeordnet. Anstelle der zylindrischen Vollrohre können auch bei dieser Ausführungsform der erfindungsgemäßen Vorrichtung andere geeignete verformbare metallische Profile verwendet werden. Die Vollrohre erstrecken sich über die gesamte Länge des Stützkörpers 1 und sind durch einzelne Punktschweißungen am Umfang 6 von mehreren oder allen Distanzscheiben 5 befestigt. Die Befestigung kann auch auf andere Weise erfolgen, z.B. mittels Bandagen oder lösbarer Schraubverbindungen. Um die Vollrohre ist wendelförmig ein Stahlband gewickelt, das an diesen ebenfalls durch einzelne Punktschweißungen befestigt ist. Anstelle des wendelförmig gewickelten Stahlbandes kann auch ein Stahlblech um die Vollrohre gelegt sein. Das Stahlband bildet wieder den Grundkörper 3, auf den das Schweißmaterial mittels nicht dargestellter Schweißköpfe bei der Herstellung des Hohlkörpers durch formgebendes Schweißen niedergelegt wird.

Die Vollrohre nehmen die durch die Schweißspannungen beim formgebenden Schweißen auftretenden Verformungen gleichmäßig auf, während die Geometrie des Stützkörpers 1 und der Distanzscheiben 5 erhalten bleibt. Die Geometrie des Grundkörpers 3 verändert sich entsprechend der Verformung der Profile 2. Nach Fertigstellung des formgebend geschweißten Hohlkörpers kann der Stützkörper 1 mit den Distanzscheiben 5 und nach Lösung der Punktschweißstellen aus dem Hohlkörper herausgezogen werden. Soll nachfolgend ein Hohlkörper mit gleichem Innendurchmesser wie der hergestellte erzeugt werden, so kann der Stützkörper mit den Distanzscheiben ohne weiteres wieder verwendet werden. Soll dagegen ein Hohlkörper mit einem anderen Durchmesser erzeugt werden, so werden die verwendeten Distanzscheiben vom Stützkörper abgezogen

0115598

und durch andere im Lager befindliche Distanzscheiben ersetzt. Nach Lösen der übrigen Punktschweißstellen können die verformten Vollrohre aus dem Hohlkörper herausgezogen werden. Der erzeugte Hohlkörper kann dann den weiteren Bearbeitungsstationen zugeführt werden.

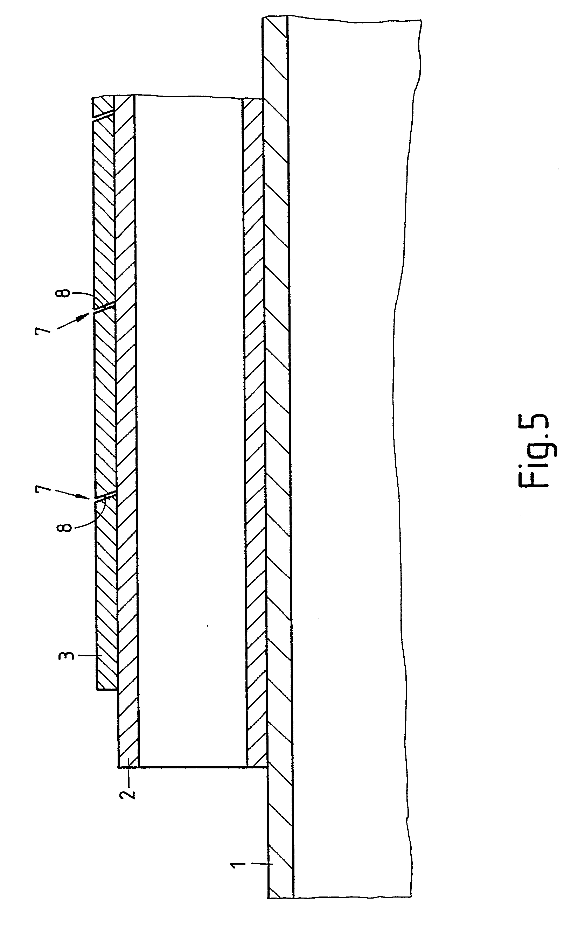

Wie Fig. 5 zeigt, besitzt das wendelförmig um die Vollrohre herumgelegte Stahlband an den Längskanten 7 abgeschrägte Flächen 8. Diese Flächen überdecken sich im gewickelten Zustand des Stahlbandes . Diese Ausbildung der Längskanten bewirkt, daß beim Niederlegen der Schweißraupen auf den Grundkörper 3 kein flüssiges Schweißmaterial zwischen den Längskanten hindurchtreten kann. Der Vorteil besteht somit darin, daß ein kostenaufwendiges Verschweißen der Längskanten 7 des Stahlbandes zur Herstellung des Grundkörpers 3 nicht erforderlich ist. Anstelle der Abschrägung der Längskanten können auch andere Ausbildungen, die im aufgewickelten Zustand des Stahlbandes eine Überdeckung bewirken, angewendet werden, beispielsweise Abtreppungen.

0115598

Ansprüche

1. Vorrichtung zur Herstellung zylindrischer Hohlkörper durch formgebendes Schweißen mit einer in radialer Richtung veränderbaren Verbindung mittels elastisch verformbarer Elemente zwischen einem drehbar gelagerten und antreibbaren Stützkörper und einem Grundkörper, auf den das Schweißmaterial niedergelegt wird, dadurch gekennzeichnet, daß auf dem Umfang (4) des Stützkörpers (1) gleichmäßig verteilt elastisch verformbare metallische Profile (2) lösbar befestigt sind und daß der Grundkörper (3) aus einem um die Profile (2) herumgelegten und mit diesen lösbar verbundenen Blech oder Band besteht.

2. Vorrichtung nach Anspruch 1, dadurch gekennzeichnet, daß sich die Profile (2) über die gesamte Länge des Stützkörpers (1) erstrecken.

83/301
W/Ka

3. Vorrichtung nach Anspruch 1 und 2, d a d u r c h g e k e n n z e i c h n e t , daß die verformbaren metallischen Profile (2) als zylindrische Vollrohre ausgebildet sind.

4. Vorrichtung nach Anspruch 1 und 2, d a d u r c h g e k e n n z e i c h n e t , daß die verformbaren metallischen Profile (2) als Halbrohre, Winkel-, Z- oder Wellblechprofile ausgebildet sind.

5. Vorrichtung nach Anspruch 1 bis 4, d a d u r c h g e k e n n z e i c h n e t , daß zur Veränderung des Durchmessers des Stützkörpers (1) auf dessen Umfang (4) Distanzscheiben (5) angeordnet sind, auf deren Umfang (6) die metallischen Profile (2) lösbar befestigt sind.

6. Vorrichtung nach Anspruch 1 bis 5, d a d u r c h g e k e n n z e i c h n e t , daß der Grundkörper (3) aus einem wendelförmig um die verformbaren metallischen Profile (2) gewickelten Stahlband besteht, das an den Profilen (2) lösbar befestigt ist.

7. Vorrichtung nach Anspruch 6, d a d u r c h g e - k e n n z e i c h n e t , daß das Stahlband an den Längskanten (7) abgeschrägte Flächen (8) aufweist, die sich im gewickelten Zustand des Stahlbandes überdecken.

Fig.1

Fig.2

Fig.4

Fig.3

Fig.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,A | DE-C-3 029 686 (THYSSEN AG) <br> * Vollständiges Dokument * <br><br> ----- | 1,2,4 | B 23 K 31/06 <br> B 23 K 9/04 |

DOMAINES TECHNIQUES RECHERCHES (Int. Cl. ³)

B 23 K 9/00
B 23 K 31/00
B 23 K 37/00

Le présent rapport de recherche a été établi pour toutes les revendications

| Lieu de la recherche <br> BERLIN | Date d'achèvement de la recherche <br> 27-03-1984 | Examinateur <br> WUNDERLICH J E |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82